(19) Europäisches Patentamt
European Patent Office
Office européen des brevets

(11) **EP 0 563 011 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.⁶: **E03B 7/07**, G05D 16/10

(21) Anmeldenummer: **93810187.0**

(22) Anmeldetag: **15.03.1993**

(54) **Hauswasseranlage**

Domestic water installation

Installation d'eau domestique

(84) Benannte Vertragsstaaten:
**AT BE CH DE DK ES FR GB GR IE IT LI LU MC NL PT SE**

(30) Priorität: **27.03.1992 DE 4210034**

(43) Veröffentlichungstag der Anmeldung:
**29.09.1993 Patentblatt 1993/39**

(73) Patentinhaber: **Schenk, Rudolf**
**CH-5035 Unterentfelden (CH)**

(72) Erfinder: **Schenk, Rudolf**
**CH-5035 Unterentfelden (CH)**

(74) Vertreter: **Rottmann, Maximilian R.**
**c/o Rottmann, Zimmermann + Partner AG**
**Glattalstrasse 37**
**8052 Zürich (CH)**

(56) Entgegenhaltungen:
EP-A- 255 936          DE-A- 3 908 933
FR-A- 375 424          FR-A- 1 593 318
NL-A- 7 905 832        US-A- 5 052 721

## Beschreibung

Die vorliegende Erfindung bezieht sich auf eine Hauswasseranlage der im Oberbegriff des Patentanspruchs 1 genannten Art sowie auf einen Wasserbehandlungsapparat der im Oberbegriff des Patentanspruchs 7 genannten Art.

Solche Hauswasseranlagen sind heute in den allermeisten Häusern vorhanden und werden üblicherweise an die ins Haus führende Frischwasserleitung angeschlossen. Für die Wasserbehandlung weist eine solche Hauswasseranlage im allgemeinen einen Druckregulierapparat sowie einen Filterapparat auf. Auch sind inzwischen des öfteren Entkalkungsapparate vorhanden. Am Ausgang der Hauswasseranlage sind im Normalfall eine Hauptwasserleitung sowie eine bis drei weitere Wasserleitungen angeschlossen. Eine gattungsgemässe Hauswasseranlage hat im wesentlichen zwei Aufgaben zu erfüllen:

1. Der Druck in der ins Haus führenden Frischwasserleitung ist im allgemeinen nicht nur relativ hoch, sondern schwankt auch innerhalb gewisser Grenzen. Deshalb beinhalten diese Hauswasseranlagen im allgemeinen einen Druckreduzierapparat, welcher üblicherweise so ausgebildet ist, dass der Wasserdruck sowohl reguliert wie auch reduziert wird und somit den in der ins Haus führenden Frischwasserleitung herrschenden Druck auf einen vorgegebenen, meistens einstellbaren Wert herabsetzt und auf diesem vorgegebenen Wert hält, unabhängig von Druckschwankungen auf der Einlassseite.

2. Das ins Haus geleitete Frischwasser kann Schmutzteilchen enthalten, die zu einer Beeinträchtigung der Funktion der Armaturen und Geräte innerhalb des Hauses führen können und die vom Bewohner eines Hauses heutzutage nicht mehr toleriert werden. In der Hauswasseranlage ist deshalb ein Filterapparat vorgesehen, durch den das Frischwasser zunächst hindurchgeleitet wird, um zumindest die grösseren der vorhandenen Schmutzteilchen herauszufiltern.

Die Anforderungen, die an eine solche Hauswasseranlage gestellt werden, sind heute vor allem geringe, kompakte Abmessungen, da die Zuverlässigkeit und die Wartungsfreundlichkeit der bereits im Einsatz stehenden Anlagen inzwischen als gut angesehen werden kann.

Der Aufbau einer konventionellen Hauswasseranlage kann im allgemeinen etwa so aussehen: Am Eingang der Anlage ist eine Rohrabzweigung mit einem Anschluss für die Gartenleitung vorhanden. Daran anschliessend folgt der Filterapparat. Am Ausgang des Filterapparats ist wiederum eine Rohrabzweigung, üblicherweise für die Garage, vorhanden. Danach folgt der Druckreduzierapparat und am Ausgang desselben erneut eine Rohrabzweigung für den Kaltwasseranschluss. Als zweitletztes Bauelement folgt eine Rohrabzweigung für den Boileranschluss. Zuhinterst schliesslich ist ein Füllhahn für die Heizung angebracht. Daraus ergibt sich, dass an der Gartenleitung ungereinigtes Wasser, welches über den vollen Druck der Frischwasserleitung verfügt, zur Verfügung steht. An der Garagenleitung steht in etwa derselbe Druck an, jedoch ist dieses Wasser bereits von den gröbsten Schmutzpartikeln befreit, d.h. gefiltert. Am Kaltwasseranschluss, am Boileranschluss sowie am Füllhahn für die Heizung steht schliesslich gefiltertes und druckreduziertes sowie druckreguliertes Wasser zur Verfügung.

Solchermassen ausgebildete Hauswasseranlagen bauen relativ breit, so dass der Platzbedarf für eine derartige, konventionelle Hauswasseranlage doch beträchtlich gross ist. In älteren Häusern kommt es des öfteren vor, dass die installierte Hauswasseranlage noch über keinen Filterapparat verfügt. Soll nun beispielsweise bei einem Umbau des Hauses eine bereits bestehende Hauswasseranlage mit einem solchen Filterapparat ergänzt werden oder eine neue Anlage eingebaut werden, so fehlt dafür oft der nötige Platz.

Bei Neubauten soll der Platzbedarf einer gattungsgemässen Hauswasseranlage auch optimiert werden, da sonst unnötig viel Platz für eine solche Installationen geopfert werden muss. Diesen Aspekten kommt in letzter Zeit immer grössere Bedeutung zu, da innerhalb des Hauses, wo immer möglich nutzbarer Raum geschaffen werden soll. Dies ist natürlich nur realisierbar, wenn unter anderem auch die Hauswasseranlage so klein wie möglich gehalten wird und dadurch der Platz optimal genutzt werden kann.

Auch bei Renovationen kommt des öfteren der Wusch auf, den für derartige Installationen benötigten Platzbedarf zu reduzieren, damit zusätzlicher, nutzbarer Raum, beispielsweise für einen Hobbyraum oder ein Büro, geschaffen werden kann.

Aus der EP-A-0 337 936 ist eine dort als Hauswasserstation bezeichnete Anlage der gattungsgemässen Art bekannt. Diese Hauswasserstation besteht aus einem Filter sowie einem Druckreduzierventil, welche zusammen als kompakte Einheit ausgebildet sind. Der Nachteil einer solchen Ausführungsform ist, dass nur Wasser entnommen werden kann, welches sowohl gefiltert wie auch im Druck reduziert ist. Ausserdem wird eine Hauswasseranlage durch eine solche Hauswasserstation unnötig verbreitert.

Es ist die Aufgabe der vorliegenden Erfindung, eine Hauswasseranlage der im Oberbegriff des Patentanspruchs 1 beschriebenen Art so weiterzubilden, dass diese eine geringere Baugrösse, insbesondere eine geringere Breite als die bisher bekannten Anlagen aufweist, dies unter Beibehaltung einer hohen Zuverlässigkeit sowie einer guten Wartungsfreundlichkeit, und dass im Druck reduziertes und allenfalls gefiltertes Wasser separat entnommen werden kann.

Gemäss der Erfindung wird diese Aufgabe durch die im Kennzeichen des Patentanspruchs 1 beschriebenen Massnahmen gelöst.

Eine weitere Aufgabe der Erfindung ist, einen Wasserbehandlungsapparat der im Oberbegriff des unabhängigen Patentanspruchs 7 beschriebenen Art so weiterzubilden, dass dieser in eine bestehende Hauswasseranlage eingebaut werden kann und dass der Platzbedarf für eine solche Hauswasseranlage dadurch optimiert wird.

Gemäss der Erfindung wird diese Aufgabe durch die im Kennzeichen des Patentanspruchs 7 beschriebenen Massnahmen gelöst.

Weitere vorteilhafte Ausführungsformen der Hauswasseranlage sind in den abhängigen Ansprüchen 2 bis 6 beschrieben, und weitere vorteilhafte Ausführungsformen der Wasserbehandlungsapparate sind in den abhängigen Ansprüchen 8 bis 14 beschrieben.

Da die Bauhöhe einer Hauswasseranlage, bedingt durch die verschiedenen Abgangsleitungen, kaum veränderbar ist, kann die Optimierung der Baugrösse einer gattungsgemässen Hauswasseranlage also nur dadurch erfolgen, dass diese in ihrer Breite reduziert wird.

Bei einer bevorzugten Ausführungsform der erfindungsgemässen Hauswasseranlage ist vorgesehen, dass sowohl ein Druckreduzierapparat als auch ein Filterapparat vorhanden sind, und dass beide jeweils einen zusätzlichen Abgang aufweisen. Wichtig dabei ist, dass über den zusätzliche Abgang beim Druckreduzierapparat bereits Wasser mit dem vorgegebenen, begrenzten Druck abgenommen werden kann, und dass bei dem Filterapparat über den zusätzlichen Abgang bereits gefiltertes -Wasser entnommen werden kann. Dadurch ergeben sich zwei wichtige Vorteile:

- Es ist sowohl für druckreduziertes Wasser wie auch für gefiltertes Wasser ein separater Abgang vorhanden.

- Es können zwei Abzweigeinheiten für behandeltes Wasser eingespart werden, so dass eine optimierte Baugrösse resultiert.

Die Wasserbehandlungsapparate können auch einzeln und nachträglich in eine bereits bestehende Hauswasseranlage eingebaut werden, ohne dass sich die Hauswasseranlage dadurch verbreitern würde. Bei einem Ersatz oder Austausch von konventionellen Wasserbehandlungsapparaten gegen erfindungsgemässe Wasserbehandlungsapparate kann die Hauswasseranlage sogar in ihrer Breite reduziert werden.

Bei Neubauten schliesslich kann durch eine erfindungsgemässe Hauswasseranlage der benötigte Platz optimiert bzw. minimiert werden.

Durch das Raccord, das die Wasserbehandlungsapparate in einer bevorzugten Ausführungsform aufweisen, wird ein einfaches Nachrüsten bzw. Austauschen begünstigt, da durch einen solchen Anschluss beim Anschliessen eines Apparats weder der Apparat selber noch die Abgangsleitung verdreht werden müssen, und dass zudem noch ein Ausrichten des Apparats bzw. der Abgangsleitung während des Anschliessens möglich ist.

Soll bei einer erfindungsgemässen Hauswasseranlage eine noch kompaktere Bauweise erreicht werden, so kann der Garten- und der Garagenanschluss zusammengelegt werden, so dass eine solche Anlage noch einmal um eine Abzweigeinheit schmaler baut.

Zur Druckregulierung bzw. Druckreduzierung benötigen gattungsgemässe Druckreduzierapparate im allgemeinen ein über eine Feder abgestütztes Schliessorgan. Der zusätzliche, zweite Anschluss, insbesondere beim Druckreduzierapparat, ist über die in einer bevorzugten Ausführungsform beschriebene Bauweise, in der der Druckreduzierapparat vom Wasser von unten nach oben durchströmt wird und in der die notwendige Feder auf seiner Unterseite angeordnet ist, auf einfache Art und Weise erzielbar. Bekannte Druckreduzierapparate sind dagegen oft so aufgebaut, dass das Wasser von der, der Feder gegenüberliegenden Seite in den Apparat hineinströmt, so dass auf derjenigen Seite des Apparates, auf der das "behandelte" Wasser abgenommen werden kann, kein Platz für einen zusätzlichen, zweiten Auslass zu Verfügung steht und dieser zusätzliche Auslass daher mit einer solchen Bauweise überhaupt nicht realisierbar ist.

Im folgenden wird ein Ausführungsbeispiel einer konventionellen Hauswasseranlage sowie einer erfindungsgemässen Hauswasseranlage anhand der beiliegenden Zeichnungen näher erläutert. Anhand einer weiteren Zeichnung wird ein erfindungsgemässer Druckreduzierapparat erläutert. In den Zeichnungen zeigen:

Fig.1   Eine konventionelle Hauswasseranlage;

Fig.2   Ein Ausführungsbeispiel einer erfindungsgemässen Hauswasseranlage; und

Fig.3   Ein Ausführungsbeispiel eines erfindungsgemässen Druckreduzierapparats im Querschnitt.

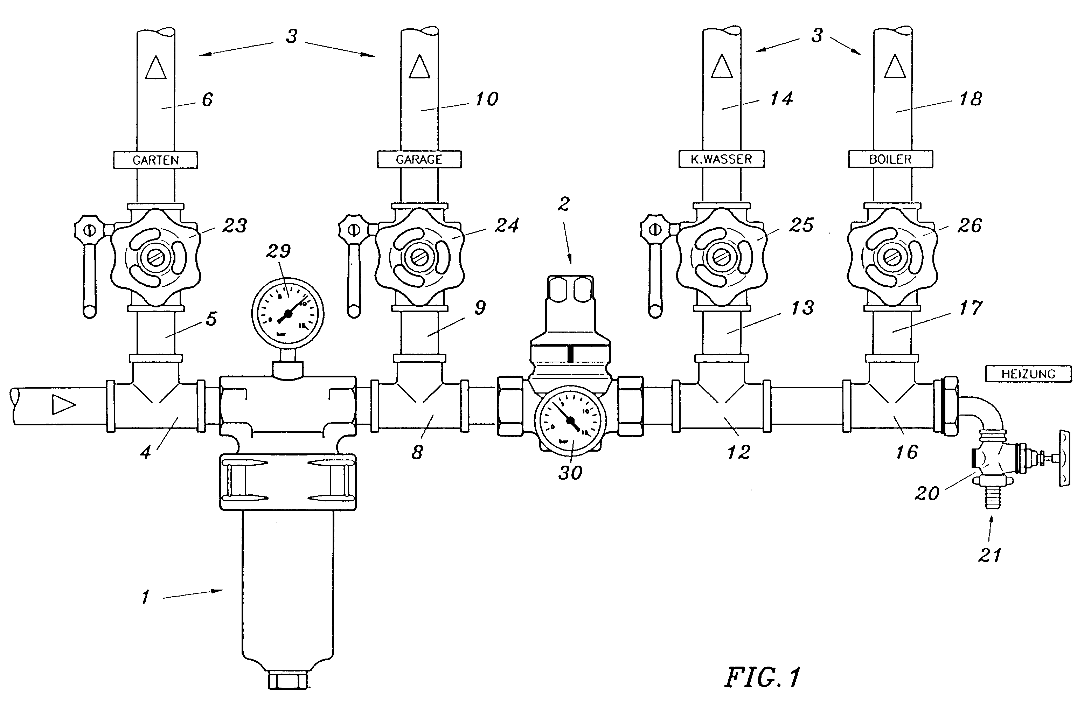

In der Fig. 1 ist eine konventionelle Hauswasseranlage dargestellt, wie sie heute üblicherweise in neueren Häusern vorhanden ist. Die dargestellte Anlage weist einen Einlass für Frischwasser, fünf Auslässe für Wasser sowie einen Filterapparat 1 und einen Druckreduzierapparat 2 auf. Ein Teil dieses an den Auslässen zur Verfügung stehenden Wassers ist dabei behandelt, das heisst gefiltert und/oder druckreguliert bzw. druckreduziert.

In Durchflussrichtung des Wassers gesehen ist zuerst eine Abzweigung 4 mit einem Auslass 5 vorhanden. Danach folgt der Filterapparat 1 und anschliessend eine zweite Abzweigung 8 mit einem Auslass 9. Nach dieser Abzweigung 8 ist der Druckreduzierapparat 2 und daran anschliessend eine dritte Abzweigung 12 mit einem Auslass 13 vorgesehen. Danach folgt schliesslich eine vierte Abzweigung 16 mit einem Auslass 17 und am Ende der Anlage ein Heizungsfüllhahn 20.

Die Abzweigungen 4, 8, 12, 16 sind dabei allesamt als T-förmige Verbindungsstücke ausgebildet, wobei der vertikal nach oben führende Anschluss jeweils als Auslass bezeichnet wird. Diese Abzweigungen 4, 8, 12, 16 besitzen an allen drei Anschlüssen jeweils ein Innengewinde. Die in die Anschlüsse der Abzweigungen 4, 8, 12, 16 eingeschraubten Verbindungsstücke weisen jeweils ein entsprechendes, korrespondierendes Aussengewinde auf.

An allen vier Auslässen 5, 9, 13, 17 der Abzweigungen 4, 8, 12, 16 ist jeweils ein an sich bekannter Absperrhahn 23, 24, 25, 26 angebracht, mittels welchem die abgehenden Leitungen absperrbar sind. Diese Absperrhähne 23, 24, 25, 26 sind dabei als Rohrverbindung mit zwei Innengewinden ausgebildet und jeweils über ein korrespondierendes Zwischenrohrstück an die Auslässe 5, 9, 13, 17 angeschraubt. Der Filterapparat 1 weist ebenfalls zwei Innengewinde auf, in die wiederum ein entsprechendes Verbindungsstück eingeschraubt ist und über die der Filterapparat 1 mit den entsprechenden Abzweigungen 4, 8 verbunden ist. Der Druckreduzierapparat 2 besitzt am Einlass sowie am Auslass jeweils ein Aussengewinde, durch welches er an ein entsprechendes, mit jeweils einer Überwurfmutter versehenes Zwischenrohrstück angeschraubt ist und dadurch auf der Einlassseite mit der Abzweigung 8 und auf der Auslassseite mit der Abzweigung 12 verbunden ist. Die Abzweigung 12 ist schliesslich wiederum über ein mit zwei Aussengewinden versehenes Zwischenrohrstück mit der Abzweigung 16 verbunden. Am Ende der Hauswasserstation ist schliesslich der Heizungsfüllhahn 20 in die vierte Abzweigung 16 eingeschraubt.

Aufgrund dieser Anordnung steht am ersten Auslass 5 ungefiltertes und im Druck nicht reduziertes Frischwasser, welches als Gartenwasser 6 bezeichnet wird, zur Verfügung. Am zweiten Auslass 9 kann gefiltertes und im Druck nicht reduziertes Wasser entnommen werden, welches als Garagenwasser 10 bezeichnet wird. Am dritten 13 und vierten Auslass 17 steht gefiltertes und im Druck reduziertes sowie reguliertes Wasser zur Verfügung das mit Kaltwasser 14 sowie Boilerwasser 18 bezeichnet wird. Am Heizungshahn 20 schliesslich steht ebenfalls gefiltertes und druckreduziertes sowie druckreguliertes Heizungswasser 21 zur Verfügung.

Der Filterapparat 1 sowie der Druckreduzierapparat 2 besitzen dabei jeweils ein Druckmessgerät in Form eines Manometers 29, 30, an welchem der am Ausgang des jeweiligen Apparats 1, 2 anstehende Wasserdruck abgelesen werden kann. Sowohl der Filterapparat 1 wie auch der Druckreduzierapparat 2 sind in dieser Ausführungsform seit längerem bekannt und werden daher hier nicht näher erläutert.

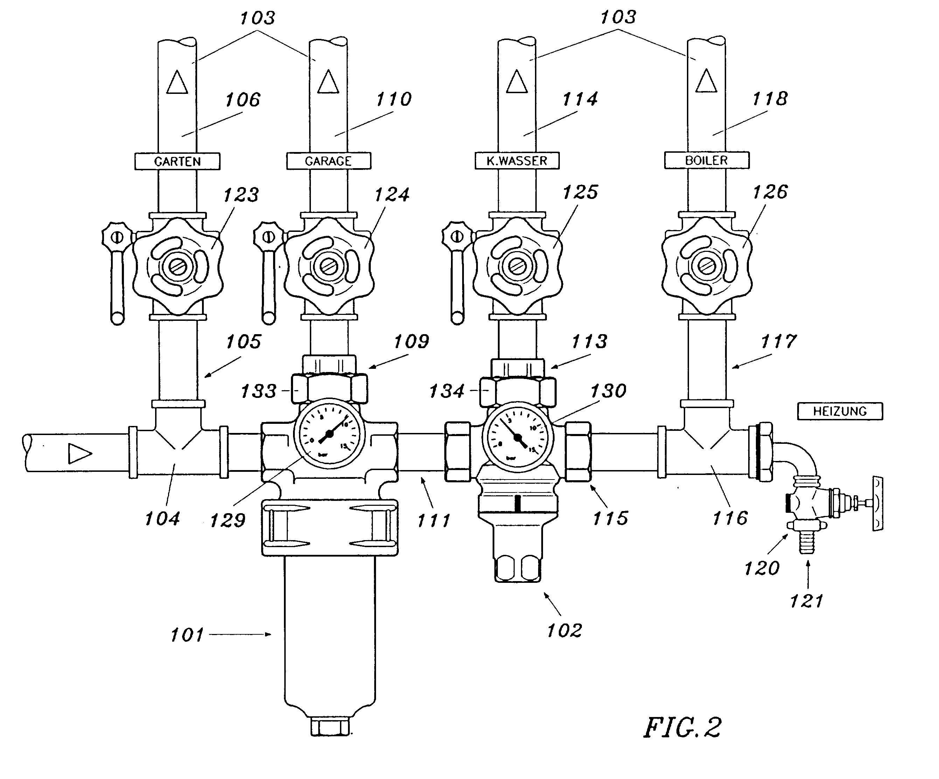

Aus der Figur 2 ist eine erfindungsgemässe Hauswasseranlage ersichtlich. Diese Hauswasseranlage verfügt ebenfalls über Auslässe für Gartenwasser, Garagenwasser, Kaltwasser, Boilerwasser sowie Heizungswasser.

In Durchflussrichtung des Wassers gesehen, ist zuerst wiederum wie in Fig.1, eine T-förmige Abzweigung 104 mit einem Auslass 105, an welchem die Gartenleitung 106 angeschlossen ist. Danach folgt der Filterapparat 101, welcher über zwei Auslässe 109, 111 verfügt. Am einen Auslass 109 ist die Garagenleitung 110 angeschlossen, währenddem am anderen Auslass 111 über ein Zwischenstück der Druckreduzierapparat 102 angeschlossen ist. Der Druckreduzierapparat 102 selber weist ebenfalls zwei Auslässe 113, 115 auf, wobei am einen Auslass 113 die Kaltwasserleitung 114 und am anderen Auslass 115 über ein Verbindungsstück die zweite T-förmige Abzweigung 116 angeschlossen ist. Am Auslass 117 dieser Abzweigung 116 ist die Boilerleitung 118 angeschlossen. Am Ende schliesslich ist wiederum der Heizungsfüllhahn 120 angebracht. An den Auslässen 105, 109, 113, 117 für Gartenwasser, Garagenwasser, Kaltwasser sowie Boilerwasser ist wiederum wie in Fig. 1 jeweils über ein Zwischenrohrstück ein Absperrhahn 123, 124, 125, 126 angebracht.

Der grundlegende Unterschied einer solchen Hauswasseranlage gegenüber der in Fig. 1 dargestellten Ausführungsform ist, dass sowohl der Filterapparat 101 wie auch der Druckreduzierapparat 102 über einen zusätzlichen, zweiten Auslass 109, 113 verfügen, an welchem jeweils die entsprechende Wasserleitung 110, 114 für Garagenwasser respektive Kaltwasser angeschlossen ist. Die Verbindung des von den Apparaten 101, 102 abgehenden, mit einem Aussengewinde versehenen und in vertikaler Richtung verlaufenden Auslasses 109, 113 mit dem entsprechenden Absperrhahn 124, 125, erfolgt jeweils durch ein Verbindungsstück, welches auf der einen Seite eine Überwurfmutter 133, 134 und auf der anderen Seite ein Aussengewinde aufweist. Dieses Verbindungsstück ist mit seinem Aussengewinde am Innengewinde des Absperrhahns 124, 125 und mit der Überwurfmutter 133, 134 am entsprechenden Aussengewinde des Apparats 101, 102 angeschraubt. Dadurch sind die beiden Absperrhähne 124, 125 jeweils unmittelbar mit dem zusätzlichen, zweiten Auslass der Apparate 101, 102 verbunden.

Diese Verbindungsart hat den Vorteil, dass die an den Apparaten 101, 102 angeschlossenen Wasserleitungen 110, 114 durch die Überwurfmutter 133, 134 problemlos angeschlossen bzw. gelöst werden können und ausserdem während der Montage radial verdreht und entsprechend ausgerichtet werden können.

Aus Fig.2 ist sofort ersichtlich, dass eine solche Hauswasseranlage, dank des jeweiligen zusätzlichen, zweiten Auslass 109, 113 der Apparate 101, 102, wesentlich schmaler ist als eine konventionelle Hauswasseranlage (Fig. 1) und trotzdem über die gleiche Anzahl von Anschlüssen bzw. abgehenden Wasserleitungen sowie Wasserbehandlungsapparaten verfügt.

Es ist natürlich auch möglich, durch eine Umkehrung der Anordnung der Apparate 101, 102 (Druckreduzierapparat vor dem Filterapparat) oder durch das Weglassen von einem der beiden Apparate 101, 102 die Behandlung des Wassers zu verändern. Bei Umkehrung der Anordnung würde das bedeuten, dass druckreduziertes, aber nicht gereinigtes Wasser separat entnommen werden kann.

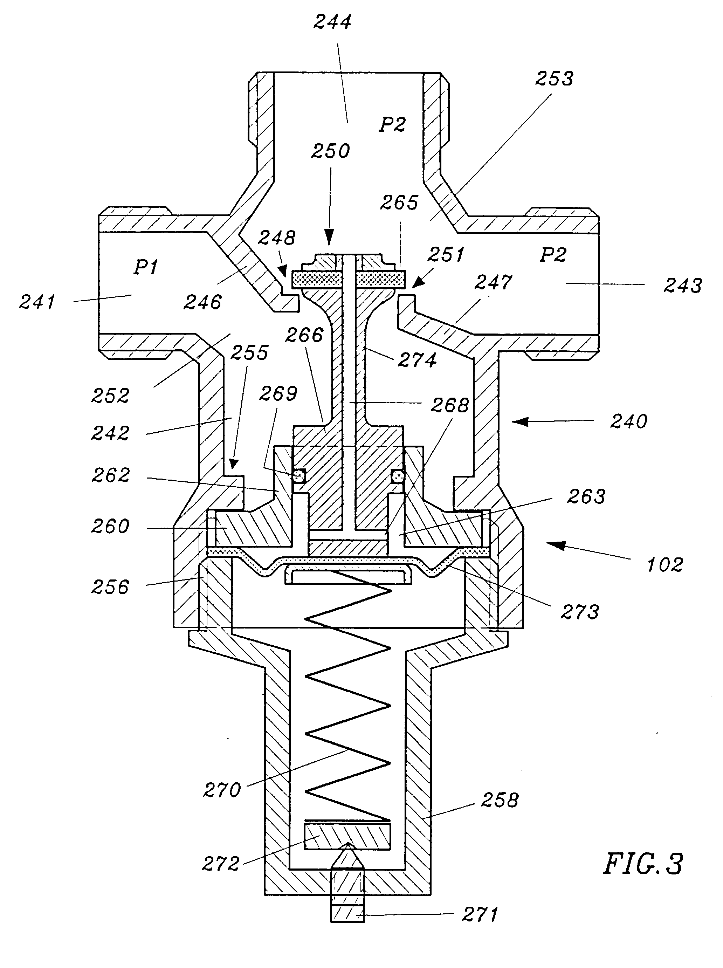

Um bei einem Druckreduzierapparat 102 einen zusätzlichen, zweiten Anschluss 113 zu ermöglichen, muss dieser entsprechend aufgebaut sein. Eine erfindungsgemässe Ausführungsform ist in der Fig. 3 im Querschnitt dargestellt.

Der Druckreduzierapparat weist ein Gehäuse 240 auf, welches einen horizontalen Einlass 241, eine darunter liegende, mit dem Einlass 241 verbundene Kammer 242 sowie zwei Auslässe 243, 244 besitzt. Der eine Auslass 243 liegt dabei horizontal in der gleichen Achse wie der Einlass 241, währenddem der andere Auslass 244 unter einem Winkel von 90° bezogen auf die vorerwähnte Achse nach oben verläuft.

Durch eine Quetschkante 246 sowie eine Wasserleitkante 247 wird eine Verengung 248 auf der Höhe der erwähnten Achse, zwischen dem Einlass 241 und dem Auslass 243, im Innern des Gehäuses 240 gebildet, welche von einem Schliessorgan 250 verschliessbar ist. Durch diese Verengung 248 wird dabei auf der Eingangsseite ein Druckraum 252 und auf der Auslassseite eine Verteilraum 253 gebildet.

In der vertikal nach unten führenden, zylindrischen Kammer 242 des Gehäuses 240 ist eine als Bund ausgebildete Verengung 255 und daran anschliessend ein Innengewinde 256 angebracht. In das Innengewinde 256 ist ein entsprechender, glockenförmiger Unterteil 258 zum Abschluss der Öffnung 242 gegen unten eingeschraubt.

Zwischen der Oberkante des eingeschraubten Unterteils 258 und dem Bund der Verengung 255 ist eine Ringscheibe 260 sowie eine darunter liegende Membran 273 eingeklemmt, welche im Bereich ihres Zentrums mit dem Schliessorgan 250 verbunden ist. Die Ringscheibe besitzt eine zentrale Bohrung mit einem die Bohrung umschliessenden Fortsatz 262, so dass dadurch eine Zylinderkammer 263 gebildet ist.

Das Schliessorgan 250 selber weist ein scheibenförmiges Dichtorgan 265, einen zylindrischen Kolben 266 sowie einen Federteller 267 auf. Das Dichtorgan 265 und der Kolben 266 sind über eine Verbindungsstange 274 miteinander verbunden. Die Zylinderkammer 263 der Ringscheibe 260 ist so ausgebildet, dass sie den Kolben 266 mit geringem Spiel umschliesst und dieser dadurch entsprechend geführt ist. Der am unteren Ende des Schliessorgans 250 angeordnete Federteller 267 bildet zusammen mit der Ringscheibe 260 bei seiner nach oben gerichteten Bewegung einen Anschlag für das Schliessorgan 250, währenddem das Dichtorgan 265 zusammen mit der Verengung 248 bei seiner nach unten gerichteten Bewegung einen Anschlag für das Schliessorgan 250 bildet. Das Schliessorgan 250 ist über eine zwischen dem Unterteil 258 und dem Federteller 267 eingespannte Feder 270 vorgespannt. Zur Verstellung der Vorspannkraft der Feder 270 ist eine Stellschraube 271 im Unterteil 258 vorhanden, welche über ein Plättchen 272 auf die Feder 270 wirkt. Zur Abdichtung des Kolbens 266 gegen die Zylinderkammer 263 weist der Kolben 266 einen entsprechenden Dichtring 269 auf. Ferner ist das Schliessorgan 250 noch mit einem Steuerkanal 268 versehen, welcher sich durch die Verbindungsstange 274 hindurch in den Kolben 266 erstreckt und dabei die Auslässe 243, 244 mit dem Teil der Zylinderkammer 263 verbindet, der sich unterhalb des Kolbens 266 und oberhalb der Membran 273 befindet.

Die Funktionsweise des vorstehend beschriebenen Druckreduzier-und Druckregulierapparats 102, der den Druck des Wassers sowohl reduziert als auch reguliert, ist an sich bekannt, weshalb hier nur oberflächlich darauf eingegangen wird.

Der in Fig. 3 gezeigte Druckreduzier- und Druckregulierapparat 102 ist vom Prinzip her eine nachgesteuerte Druckwaage. Der in den Auslässen 243, 244 herrschende Druck P2 wirkt über den Steuerkanal 268 auf die Membrane 273 mit der Fläche D3 gegen die an der Feder 270 mittels der Stellschraube 271 eingestellte Federkraft Fe nach folgender Gleichung:

$$P2 \times D3 = Fe.$$

Im Betrieb herrscht am Einlass 241 ein Eingangsdruck P1, der üblicherweise schwankend sein kann. Der Druckreduzier- und Druckregulierapparat 102 sei eingestellt auf einen gewünschten Ausgangsdruck P2. Im Haus, d.h. an der abgehenden Leitung 114 bzw. 118 (Fig. 2) sei ein Wasserhahn geöffnet. Dabei stellt sich ein dynamischer Durchflusszustand ein: Der Breite des Steuerspalts 251 hat sich auf einen bestimmten Wert eingependelt. Angenommen, ein zweiter Hanh wird geöffnet; dies bewirkt, dass momentan der Druck P2 an den Auslässen 243, 244 abfällt, d.h. das Produkt P2 x D3 wird kleiner. Da die Federkraft Fe konstant bleibt, drückt die Feder 270 den Kolben 266 nach oben, so dass sich die Breite des Spalts 251 vergrössert. Hiermit wird aber auch der an den Auslässen 243, 244 herrschende Druck P2 erhöht, bis das Gleichgewicht wieder hergestellt ist.

Schliesst man den zweiten, geöffneten Hahn, passiert genau das umgekehrte: Der Druck P2 in den Auslässen 243, 244 steigt an, das Produkt P2 x D3 erhöht sich und wird grösser als die Kraft Fe der Feder. Dadurch wird die Spaltbreite 251 soweit verringert, bis sich wieder ein Gleichgewicht eingestellt hat. Sind im Haus alle Hähne geschlossen, wird der Ringspalt gleich null; es herrscht ein statischer Druck in der abgehenden Leitung 114 bzw. 118 (Fig. 2).

Schwankungen des Eingangsdrucks P1 haben keinen Einfluss auf den Steuerkolben, da theoretisch der Durchmesser der Verengung 248 gleich dem Durchmesser des Kolbens 266 ist. In der Praxis ist aber der Durchmesser des Steuerkolbens 266 um etwa 5% grösser als der Durchmesser der Verengung 248; dies um eher das Schliessen zu begünstigen. Diese Massnahme dient dazu, Druckspitzen im Haus zu brechen und den Ringspalt 251 im statischen Zustand dicht zu halten und dadurch zu vermeiden, dass in diesem Zustand das Ventil durchsteigt.

Bei der in Fig. 3 dargestellten und vorstehend beschriebenen Konstruktion des Druckreduzier- und Druckregulierapparats 102 ist die Dichtscheibe 265 am Ende der Verbindungsstange 274 zum Steuerkolben 266 frei gelagert und taucht fliegend in den Raum zwischen den Auslässen 243, 244 ein. Daher ist es ermöglicht worden, den erfindungsgemäss vorgesehenen, zweiten Auslass 244 vorzusehen. Bei bekannten Apparaten verläuft eine Verlängerung der Verbindungsstange 274 des Steuerkolbens 266 bis in den Bereich des zweiten Auslasses 244 und ist dort nochmals mit einer Buchse geführt.

## Patentansprüche

1. Hauswasseranlage, welche einen Einlass für Wasser, einen Druckreduzierapparat (102) zum Reduzieren des Wasserdrucks und gegebenenfalls einen Filterapparat (101) zum Filtern des Wassers aufweist, wobei der Druckreduzierapparat (102) einen Auslass (115) für das im Druck reduzierte Wasser und der gegebenenfalls vorhandene Filterapparat (101) einen Auslass (113) für das gefilterte Wasser aufweist, **dadurch gekennzeichnet**, dass sowohl ein Druckreduzierapparat (102) wie auch ein Filterapparat (101) vorgesehen sind, dass der Filterapparat (101) in Strömungsrichtung des Wassers vor dem Druckreduzierapparat (102) angeordnet ist, dass der Druckreduzierapparat (102) von unten nach oben durchströmt wird und dass sowohl der Druckreduzierapparat (102) wie auch der Filterapparat (101) je einen zusätzlichen Auslass aufweisen und dessen Querschnitt im wesentlichen dem Querschnitt des ersten Auslasses entspricht.

2. Hauswasseranlage nach Anspruch 1, wobei mehrere abgehende Leitungen (103) für verschiedene Anwendungszwecke des Wassers vorhanden sind, dadurch gekennzeichnet, dass zum Verbinden der abgehenden Leitungen (103) mit dem/den Apparat(en) (101, 102) jeweils eine Kupplung vorhanden ist/sind, die aus einem Aussengewinde und einer als Raccord ausgebildeten Überwurfmutter (133, 134) besteht, derart dass der Apparat (101, 102) bzw. die abgehende(n) Leitung(en) (103), vor dem Festziehen der Überwurfmutter (133, 134), ausgerichtet werden kann/können, und dass dadurch die abgehende(n) Leitung(en) (103) unmittelbar an dem bzw. den Apparat(en) (101, 102) anschliessbar ist/sind.

3. Hauswasseranlage nach Anspruch 1 oder 2, dadurch gekennzeichnet, dass die Uberwurfmutter (133, 134) an einer oder mehreren an dem/den Apparat(en) (101, 102) anschliessbare(n) Leitung(en) (103) und das Aussengewinde am zweiten (zusätzlichen) Auslass (109, 113) des/der Apparate(s) (101, 102) vorgesehen ist.

4. Hauswasseranlage nach einem der Ansprüche 1 bis 3, dadurch gekennzeichnet, dass die Überwurfmutter (133, 134) am zweiten zusätzlichen Auslass (109, 113) des/der Apparat(s) (101, 102) angeordnet ist, und dass an der bzw. den anschliessbaren Leitung(en) (103) jeweils ein Aussengewinde vorgesehen ist.

5. Druckreduzierapparat (102) in einer Hauswasseranlage nach Anspruch 1, dadurch gekennzeichnet, dass am Einlass (241) eine in Strömungsrichtung des Wassers gesehen nach unten gerichtete Quetschkante (246) vorhanden ist, dass im weiteren eine als Bund ausgebildete Verengung (248) mit einem Schliessorgan (250) vorgesehen ist, und dass die Achse des einen Auslasses (243) fluchtend zur Achse des Einlasses (241) und die Achse des anderen Auslasses (244) senkrecht dazu verläuft, derart, dass das einströmende Wasser zuerst nach unten abgelenkt wird, danach die Verengung (248) durchströmt und schliesslich durch die beiden Auslässe (243, 244) aus dem Druckreduzierapparat (102) ausströmen kann.

## Claims

1. Domestic water station, which comprises an inlet for water, a pressure reducing apparatus (102) for reducing the water pressure and, if appropriate, a filter apparatus (101) for filtering the water, whereby the pressure reducing apparatus (102) is provided with an outlet (115) for the water having reduced pressure and whereby the possibly present filter apparatus (101) is provided with an outlet (113) for the filtered water, characterized in that both a pressure reducing apparatus (102) and a filter apparatus (101) are provided, that the filter apparatus (101) is located, as seen in the direction of the flow of the water, in front of the pressure reducing apparatus (102), that the pressure reducing apparatus (102) is flown through from the bottom to the top and that both the pressure reducing apparatus (102) and the filter apparatus (101) are provided each with an additional outlet, the cross section thereof essentially corresponding to the cross section of the first outlet.

**2.** Domestic water station according to claim 1, whereby several outgoing conduits (103) for different purposes of application of the water are provided, characterized in that for connecting the outgoing conduits (102) to the apparatus(es) (101, 102) in each case a connector member is/are provided, consisting of an external screw-thread and a union nut (133, 134) serving as a junction coupling, such that the apparatus (101, 102) and the outgoing conduit (s) (103), respectively, can be aligned before the union nut (133, 134) is tightened, and that thereby the outgoing conduit(s) (102) is/are connectable directly to the apparatus(es) (101, 102).

**3.** Domestic water station according to claim 1 or 2, characterized in that the union nut (133, 134) is provided at one or several of the conduits (103) connectable to the apparatus(es) (101, 102) and the external screw-thread is provided at the second (additional) outlet (109, 113) of the apparatus(es) (101, 102).

**4.** Domestic water station according to one of the claims 1 to 3, characterized in that the union nut (133, 134) is provided at the second, additional outlet of the apparatus(es) (101, 102), and that at the conduit(s) (103) connectable thereto in each case an external screw-thread is provided.

**5.** Pressure reducing apparatus (102) in a domestic water station according to claim 1, characterized in that at the inlet(241) there is provided a squeezing edge (246) which is directed downwards, as seen in the direction of the flow of the water, that moreover a constriction (248) designed as a collar and having a closure member (250) is provided, and that the axis of the one inlet (243) is lined-up with the axis of the inlet (241) and the axis of the other outlet (244) is perpendicular thereto, such that the water flowing in first is deflected downwards, then flows through the constriction (248) and finally can flow out of the pressure reducing apparatus (102) through the two outlets (243, 244).

**Revendications**

**1.** Installation d'eau domestique, qui présente une entrée pour l'eau, un appareil de réduction de pression (102) pour réduire la pression d'eau et éventuellement un appareil de filtrage (101) pour le filtrage de l'eau, l'appareil de réduction de pression (102) présentant une sortie (115) pour l'eau réduite en pression et l'appareil de filtrage (101) éventuellement présent une sortie (113) pour l'eau filtrée, caractérisée en ce qu'on prévoit aussi bien un appareil de réduction d'eau (102) qu'un appareil de filtrage (101), en ce que l'appareil de filtrage (101) est disposé dans le sens d'écoulement de l'eau en amont de l'appareil de réduction de pression (102), en ce que l'appareil de réduction de pression (102) est parcouru du bas vers le haut et en ce que l'appareil de réduction de pression (102) comme l'appareil de filtrage (101) présentent chacun une sortie supplémentaire, et dont la section correspond sensiblement à la section de la première sortie.

**2.** Installation d'eau domestique selon la revendication 1, plusieurs conduites (103) de départ étant présentes pour diverses applications de l'eau, caractérisée en ce que, pour la liaison des conduites de départ (103) avec l'appareil/les appareils (101, 102), il existe respectivement un couplage qui comprend un filetage externe et un écrou à chapeau (133, 134) conçu comme raccord, de telle manière que l'appareil (101, 102) ou la (les) conduite(s) peut (peuvent) être orienté(es) avant le blocage de l'écrou à chapeau (133, 134), et en ce que la (les) conduite(s) de départ (103) peut (peuvent) être raccordée(s) directement sur l'appareil ou les appareils (101, 102).

**3.** Installation d'eau domestique selon la revendication 1 ou 2, caractérisée en ce que l'écrou à chapeau (133, 134) est prévu sur une conduite ou plusieurs conduites (103) raccordable(s) à l'appareil (aux appareils) (101, 102) et le filetage extérieur est prévu sur la deuxième sortie (supplémentaire) (109, 113) de l'appareil (des appareils) (101, 102).

**4.** Installation d'eau domestique selon l'une quelconque des revendications 1 à 3, caractérisée en ce que l'écrou à chapeau (133, 134) est disposé sur la deuxième sortie (109, 113) supplémentaire de l'appareil/des appareils (101, 102), et en ce qu'un filetage extérieur est prévu respectivement sur la conduite ou les conduites (103) raccordable(s).

**5.** Appareil de réduction de pression (102) dans une installation d'eau domestique selon la revendication 1, caractérisé en ce qu'une arête d'écrasement (246) dirigée vers le vas vu dans le sens d'écoulement de l'eau est présente à l'entrée (241), en ce qu'il est prévu également un rétrécissement (248) conformé en collerette avec un organe de fermeture (250) et en ce que l'axe d'une sortie (243) est aligné avec l'axe de l'entrée (241) et l'axe de l'autre sortie (244) est perpendiculaire à celui-ci, en ce que l'eau entrant est d'abord déviée vers le bas, parcourt ensuite le rétrécissement (248) et enfin peut sortir de l'appareil de réduction de pression (102) par les deux évacuations (243, 244).

FIG.1

FIG.2

FIG.3